Europäisches Patentamt

European Patent Office

Office européen des brevets

(11) Veröffentlichungsnummer: **0 112 992**

A1

## (12) EUROPÄISCHE PATENTANMELDUNG

(21) Anmeldenummer: 83110784.2

(22) Anmeldetag: 28.10.83

(51) Int. Cl.³: **F 04 D 29/12**
F 16 J 15/34

(30) Priorität: 27.11.82 DE 3244066

(43) Veröffentlichungstag der Anmeldung:
11.07.84 Patentblatt 84/28

(84) Benannte Vertragsstaaten:
DE FR GB IT SE

(71) Anmelder: GOETZE AG
Bürgermeister-Schmidt-Strasse 17
D-5093 Burscheid 1(DE)

(72) Erfinder: vom Stein, Karl
Am Sportfeld 15
D-5093 Burscheid(DE)

(54) Gleitringdichtung.

(57) In einer Gleitringdichtung für insbesondere die Abdichtung festkörperhaltiger Flüssigkeiten mit einem feststehenden Gegenring (4), einem rotierenden Gleitring (3) und die Ringe aufnehmenden Trägerkörpern (7,8) aus relativ harten und verschleißfesten Werkstoffen, wie insbesondere solche auf der Basis von gegebenenfalls gesinterten Metallen, Hartmetallen und/oder Sinterkeramik sind die Ringkörper (3,4) mit dem Trägerkörper (7,8) unter Verwendung von Zwischenringen (5,6) durch Preßsitz verbunden. Die Zwischenringe (5,6) bestehen aus Metallen mit höheren thermischen Ausdehnungskoeffizienten also die für die Ring- und Trägerkörper verwendeten Werkstoffe, so daß sich im Betrieb und beim anschließenden Abkühlen der Preßsitz der Ringe (3,4) in den Trägerkörpern (7,8) nicht lockern kann.

EP 0 112 992 A1

Croydon Printing Company Ltd.

- 1 -

Gleitringdichtung.

Die Erfindung betrifft eine Gleitringdichtung, insbesondere für die Abdichtung festkörperhaltiger Flüssigkeiten mit einem rotierenden Gleitring, einem feststehenden Gegenring und die Ringe aufnehmenden Trägerkörpern aus relativ harten und verschleißfesten Werkstoffen, wie insbesondere solchen auf der Basis von gegebenenfalls gesinterten Metallen, Hartmetallen und/oder Sinterkeramik.

Gleitringdichtungen, wie sie insbesondere in Pumpen zur Abdichtung rotierender Wellen eingesetzt werden, besitzen einen rotierenden Gleitring und einen feststehenden Gegenring, die sich mit ihren Stirnflächen in einer senkrecht zur Drehebene stehenden ringförmigen Dichtebene berühren. Sowohl Gleitring als auch Gegenring sind von Trägerkörpern umgeben und mit diesen vorzugsweise durch Preßsitz in einer Aufnahmebohrung oder durch Löten kraftschlüssig verbunden. Insbesondere dann, wenn die Gleitringdichtungen in Pumpen zur Förderung festkörperhaltiger Medien, wie beispielsweise sandhaltigen wässrigen Schlämmen, eingesetzt werden, sind die den Flüssigkeiten ausgesetzten Dichtungsteile vor allem starken abrasiven Verschleißbelastungen ausgesetzt. Gleitringe, Gegenringe und Trägerkörper bestehen dann aus besonders verschleißfesten Werkstoffen, wie gegebenenfalls gesinterten Metallen, Hartmetallen und/oder Keramik. In der Praxis ist es dabei üblich, den Gleitring und den Gegenring aus Hartmetall auf der Basis von

- 2 -

Wolframkarbiden und die Trägerkörper aus vor allem Chromnickelstählen herzustellen.

Bei derartigen Konstruktionen ist jedoch die kraftschlüssige Verbindungsstelle der Gleitund Gegenringe mit
den Trägerkörpern besonders störungsanfällig. Bei Überhitzungen, wie insbesondere beim Trockenlauf der Pumpen,
können sich die Verbindungen lösen, und die Gleitringdichtungen werden undicht und unbrauchbar. Ebenso können schon beim Verlöten der Ringe mit den Trägerkörpern Spannungsrisse im Bereich der Verbindungsstellen auftreten, von denen aus sich im Betrieb
der Gleitringdichtungen die Störungen entwickeln.

Die Gründe für derartige Ausfälle sind die unterschiedlichen Ausdehnungskoeffizienten der verwendeten
Werkstoffe. So ist der thermische Ausdehnungskoeffizient
der für die Ringe verwendeten Hartmetalle relativ niedrig
und liegt bei Hartmetallen auf der Basis von Wolframkarbid bei $6 \times 10^{-6} \frac{m}{mgrd}$ , während der Ausdehnungskoeffizient der für die Trägerkörper verwendeten
Chromnickelstähle relativ hoch ist und etwa
$16 \times 10^{-6} \frac{m}{mgrd}$ beträgt. Externe Temperaturbelastungen im Trockenlauf verringern dann die Preßspannungen im Preßsitz, während aufgelötete Ringe erhöhten Zug- bzw. Scherspannungen unterliegen.

Es ist bekannt, zur Abhilfe die Gleitringdichtungen durch
den Einbau spezieller Sicherheitsvorrichtungen, wie besonderen Kühleinrichtungen oder die Auswahl spezifischer
Werkstoffpaarungen, vor derartigen Schäden zu schützen Ebenso werden auch die Gleit- und Gegenringe durch Ummantelungen aus vor allem Kunststoffen oder Elastomeren thermisch isoliert. Allerdings sind derartige Maßnahmen vergleichsweise aufwendig und kostspielig, so daß sie nur in komplizierten Einzel-Anwendungsfällen und nicht bei Massenartikeln wirtschaftlich sind, oder der Einsatz anderer Werkstoffkombinationen, wie insbesondere die relativ weichen Kunststoffe und Elastomere, ist in Pumpen zur Förderung festkörperhaltiger Medien nicht geeignet.

Der vorliegenden Erfindung liegt daher die Aufgabae zugrunde, eine Gleitringdichtung mit Gleit- und Gegenringen sowie Trägerkörpern aus vor allem erosionsfesten Werkstoffen auf der Basis von gegebenenfalls gesinterten Metallen, Hartstoffen und/oder Sinterkeramik zu schaffen, die insbesondere in Pumpen zur Förderung festkörperhaltiger Medien eingesetzt werden kann, und bei der die Gefahr des Undichtwerdens vor allem bei Überhitzungen durch Lösen der Schrumpfverbindung oder durch Spannungsrisse in den aufgelöteten Hartmetallringen zumindest weitgehend vermieden wird. Die Gleitringdichtung soll möglichst einfach und kostensparend herstellbar sein, so daß ihre Herstellung und Verwendung als Massenartikel wirtschaftlich vertretbar ist.

Erfindungsgemäß wird diese Aufgabe durch eine Gleitringdichtung entsprechend dem Oberbegriff des Hauptpatentanspruches gelöst, bei der die Gleitringe und/oder Gegenringe unter der Verwendung relativ dünnwandiger Zwischenringe mit den sie aufnehmenden Trägerkörpern in deren Aufnahmenut durch Preßsitz verbunden sind.

- 4 -

Bei den bevorzugt verwendeten Materialien mit Gleitring-Gegenringpaarung aus gesinterten Hartmetallen und
Trägerkörpern aus Stählen besteht der eingesetzte Zwischenring aus einem Metall beziehungsweise einer Metalllegierung mit einem hohen thermischen Ausdehnungskoeffizienten, der bevorzugt über dem Wert des als
Trägerkörper verwendeten Stahles liegt. Solche Metalle
sind bevorzugt Aluminium und seine Legierungen mit
Magnesium, Kupfer und/oder Silizium, Bronzelegierungen mit gegebenenfalls Zusätzen an vor allem Eisen
und/oder Aluminium, Messinglegierungen oder auch mit
gegebenenfalls vor allem Zink oder Aluminium plattierte
Stahlbleche. Beim Erhitzen der Gleitringdichtung dehnt
sich der eingesetzte Zwischenring besonders stark aus,
die Preßspannung und damit der Preßsitz der Ringkörper in
der Aufnahmebohrung wird erhöht, so daß insbesondere die
beim Trockenlauf auftretenden höheren Reibkräfte zwischen Gleitring und Gegenring den Preßsitz im Trägerkörper nicht lockern und die Dichtung funktionsfähig
bleibt.

Entsprechend den Anwendungsfällen sind die Dimensionen
des zylindrischen Zwischenringes in Bezug auf seine
radiale Wandstärke und seine Abmessungen am Außen-
und Innenumfang entsprechend den Abmessungen der Ringkörper und der Aufnahmebohrung in den Trägerkörpern
gewählt. Der Zwischenring ist an seinem Innenumfang dabei
so bemessen, daß er nach gegebenenfalls Erwärmung den
Hartmetallring aufnehmen kann, und daß dieser durch
Preßsitz mit dem Zwischenring fest verbunden ist. Die
beim Einpressen der Ringkörper im Zwischenring auf-

- 5 -

tretenden Preßspannungen können gegebenenfalls durch nachfolgende thermische Behandlungen abgebaut werden.

Entsprechend der Dimension des Zwischenringes mit eingepreßtem Gleit- oder Gegenring ist die Dimension der Aufnahmebohrung ausgelegt, damit der geforderte Preßsitz der Ringe erreicht wird. Die entsprechend den Dimensionen zu wählende radiale Wandstärke des Zwischenringes soll gewährleisten, daß das Zwischenringmaterial unter den bei Überhitzung auftretenden erhöhten Preßspannungen sich lediglich elastisch und nicht plastisch verformt, so daß beim Abkühlen die ursprüngliche Preßspannung sich wieder einstellen kann. Die radiale Wandstärke soll zugleich so bemessen sein, daß nach dem Einpressen der Ringkörper der Außenumfang des Zwischenringes noch spanabhebend bearbeitet werden kann, damit vor allem eine verbesserte Anpassung des Zwischenringes an die Aufnahmebohrung gewährleistet ist. Auf diese Weise wird besonders vorteilhaft gegenüber den bisher bekannten Lösungen die sehr aufwendige Bearbeitung der Mantelflächen der Hartmetallflächen eingespart. Je nach Anwendungsfall muß der Fachmann die Dimensionierung des Zwischenringes aufgrund dieser aufgezeigten Voraussetzungen erneut berechnen.

Die erfindungsgemäß hergestellten Gleitringdichtungen wurden sowohl im Labor auf ihr Verhalten bei Überhitzung als auch in Prüfstandläufen im Dauerbetrieb getestet. Die Gleitringdichtungen zeigten dabei eine hervorragende

- 6 -

Eignung zum Einsatz in Pumpen, insbesondere zum Fördern von festkörperhaltigen Flüssigkeiten. Durch die Erfindung ist somit eine zuverlässige Gleitringdichtung für besonders problematische Anwendungsfälle geschaffen. Insbesondere ist die Gleitringdichtung einfach und kostensparend herzustellen, so daß sie als Massenartikel wirtschaftlich gefertigt und in relativ einfach gebauten Pumpen eingesetzt werden kann.

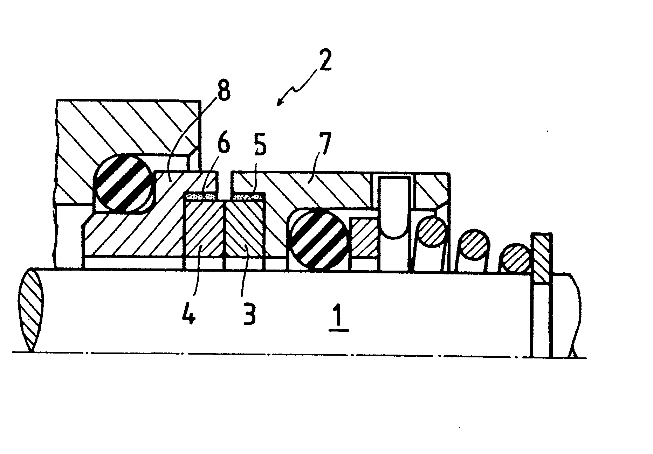

Die Erfindung und ihr Funktionsprinzip wird anhand der Abbildung und der dazugehörigen Beschreibung näher erläutert.

Im Querschnittsbild der Abbildung ist 1 die abzudichtende Welle mit der montierten Gleitringdichtung 2 mit dem rotierenden Gleitring 3 und dem feststehenden Gegenring 4. Der Gegenring 4 und der Gleitring 3 sind unter Verwendung von Zwischenringen 5,6 durch Preßsitz mit den entsprechenden Trägerkörpern 7,8 verbunden.

In diesem Fall besteht sowohl der Gleitring 3 als auch der Gegenring 4 aus Wolframkarbid mit einem thermischen Ausdehnungskoeffizienten von $6 \times 10^{-6} \frac{m}{mgrd}$
Beide Trägerkörper 7,8 bestehen aus Chromnickelstahl mit einem thermischen Ausdehnungskoeffizienten von ca. $16 \times 10^{-6} \frac{m}{mgrd}$, die beiden eingesetzten Zwischenringe 5,6 bestehen aus einem Messing mit einem thermischen Ausdehnungskoeffizienten von $19 \times 10^{-6} \frac{m}{mgrd}$
Beim Erhitzen dehnen sich die Zwischenringe 5,6 besonders stark aus, so daß die Preßspannung, mit der die Ringkörper 3,4 in den Trägerkörpern 7,8 sitzen, erhöht wird und auch

- 7 -

bei Trockenlauf keine Lockerung der Ringkörper erfolgt. In diesem Fall beträgt die radiale Wandstärke der Zwischenringe 5,6 1 mm. Die Wandstärke reicht aus, um die Mantelflächen der Ringe 5,6 noch spanend nachzubearbeiten. Sie ist im Verhältnis der Durchmesser der Ringkörper 3,4 und der Aufnahmen in den Trägerkörpern 7,8 so bemessen, daß sie sich bei praxisbezogenen Maximaltemperaturen lediglich plastisch verformt. Beim Abkühlen kann sie so wieder ihre Ausgangsdimensionen einnehmen.

- 1 -

Patentansprüche:

1. Gleitringdichtung, insbesondere zur Abdichtung festkörperhaltiger Flüssigkeiten mit einem rotierenden Gleitring, einem feststehenden Gegenring und die Ringe aufnehmenden Trägerkörpern aus relativ harten und verschleißfesten Werkstoffen, wie insbesondere aus gegebenenfalls gesinterten Metallen, Hartmetall und/oder Keramik, dadurch gekennzeichnet, daß Gleitring (3) und/oder Gegenring (4) mit den sie aufnehmenden Trägerkörpern (7,8) unter Verwendung von Zwischenringen (5,6) durch Preßsitz kraftschlüssig verbunden sind.

2. Gleitringdichtung nach Anspruch 1, dadurch gekennzeichnet, daß die Zwischenringe (5,6) aus einem Metall bestehen.

3. Gleitringdichtung nach den Ansprüchen 1 und 2, dadurch gekennzeichnet, daß das Metall der Zwischenringe (5,6) einen höheren thermischen Ausdehnungskoeffizienten besitzt als die der für Trägerkörper (7,8) und Ringkörper (3,4) verwendeten Werkstoffe.

4. Gleitringdichtung nach den Ansprüchen 1 bis 3, dadurch gekennzeichnet, daß die radiale Wandstärke der Zwischenringe (5,6) relativ gering ist und in Abhängigkeit von den Dimensionen der Trägerkörper (7,8) und Ringkörper (3,4) so festgelegt ist, daß

0112992

- 2 -

sie sich bei maximal möglicher Belastungstemperatur der Gleitringdichtung lediglich elastisch verformen kann und die spanabhebende Bearbeitung ihrer Mantelflächen noch möglich ist.

5. Gleitringdichtung nach den Ansprüchen 1 bis 4, dadurch gekennzeichnet, daß die Zwischenringe (5,6) aus Aluminium oder Aluminiumlegierungen vor allem mit Magnesium, Kupfer und/oder Silizium, aus Bronzelegierungen mit gegebenenfalls Zusätzen an vor allem Eisen und/oder Aluminium, aus Messinglegierungen und/oder aus gegebenenfalls plattiertem Stahl bestehen.

6. Verfahren zur Herstellung der Gleitringdichtungen nach mindestens einem der Ansprüche 1 bis 5, dadurch gekennzeichnet, daß die Gleitringe (3) und/oder die Gegenringe (4) zunächst mit den Zwischenringen (5,6) durch Einpressung unter gegebenenfalls Erwärmung kraftschlüssig verbunden werden, daß die Zwischenringe (5,6) mit eingepreßten Ringkörpern (3,4) spannungsfrei in einer Wärmebehandlung geglüht werden, und daß nach gegebenenfalls einer spanabhebenden Oberflächenbehandlung der Zwischenringe (5,6) diese mit den eingepressten Ringkörpern (3,4) zusammen kraftschlüssig durch Preßsitz mit den Trägerkörpern (7,8) verbunden werden.

1/1

0112992

Europäisches
Patentamt

**EUROPÄISCHER RECHERCHENBERICHT**

## EINSCHLÄGIGE DOKUMENTE

EP 83110784.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>DD - A - 112 165</u> (HARTLEIB, KARL-HEINZ)  * Gesamt *  -- | 1-3 | F 04 D 29/12  F 16 J 15/34 |
| A | <u>DE - B1 - 2711 344</u> (KLEIN, SCHANZ-LIN & BECKER)  * Gesamt *  -- | 1 | |
| A | <u>DE - A1 - 2 654 716</u> (HITACHI LTD.)  * Seite 6, Zeilen 7-2. von unten; Fig.1* -- | 1 | |
| A | <u>US - A - 3 612 548</u> (HERBERT E. TRACY)  -- | | |
| A | <u>GB - A - 1 332 094</u> (CATERPILLAR TRACTOR)  ---- | | **RECHERCHIERTE SACHGEBIETE (Int. Cl. ³)**  F 04 D  F 16 J |

Der vorliegende Recherchenbericht wurde für alle Patentansprüche erstellt.

| Recherchenort | Abschlußdatum der Recherche | Prüfer |
|---|---|---|
| WIEN | 15-03-1984 | WITTMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82